**Europäisches Patentamt**

**European Patent Office**

**Office européen des brevets**

(19)

(11) Veröffentlichungsnummer : **0 459 973 A1**

## (12) EUROPÄISCHE PATENTANMELDUNG

(21) Anmeldenummer : **91890119.0**

(22) Anmeldetag : **31.05.91**

(51) Int. Cl.$^5$ : **F16L 59/14**

(30) Priorität : **01.06.90 AT 1198/90**

(43) Veröffentlichungstag der Anmeldung :
**04.12.91 Patentblatt 91/49**

(84) Benannte Vertragsstaaten :
**AT CH DE FR LI**

(71) Anmelder : **PIPELIFE ROHRSYSTEME
GESELLSCHAFT m.b.H.
Symalenstrasse 2-6
A-3500 Krems (AT)**

(72) Erfinder : **Kistenich, Johannes
Mitteraustrasse 9
A-3500 Krems (AT)**
Erfinder : **Harsch, Richard
Weinzierl 12
A-3500 Krems (AT)**

(74) Vertreter : **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

(54) **Isoliertes Rohr sowie Verfahren zum Herstellen desselben.**

(57)    Bei einem isolierten Rohr (1) sind zwei, in definiertem Abstand voneinander angeordnete, zueinander parallel verlaufende Leitungsrohre (3) in einem wärmedämmenden Material (5) eingebettet, wobei die außenliegende Schale (7) im Querschnitt von Kreisform abweicht und eine längere Achse des Querschnittes in der Ebene der Achse (8) der beiden Leitungsrohre (3) aufweist und zwischen den Leitungsrohren (3) und der Außenschale (7) wenigstens eine Sperrschicht (4,6) für Sauerstoff und/oder Wasserdampf angeordnet ist.

Bei einem Verfahren zum herstellen eines isolierten Rohres (1) werden die zwei Leitungsrohre (3) unter Zwischenschaltung von Abstandhaltern (2) parallel zueinander geführt, worauf die Leitungsrohre (3) und die Abstandhalter (2) durch Aufwickeln oder Aufextrudieren einer Schicht (4) miteinander verbunden werden. Anschließend wird über die Leitungsrohre (3) ein Mantel (5) aus wärmedämmenden Material aufgeschäumt und es wird der Mantel (5) durch Umwickeln oder Aufextrudieren mit einer Sperrschicht ummantelt und anschließend eine Schale (7) auf die Sperrschicht (6) aufdextrudiert.

EP 0 459 973 A1

FIG. 1

Die Erfindung bezieht sich auf ein isoliertes Rohr mit wenigstens einem innenliegenden Leitungsrohr, einem wärmedämmenden Mantel und einer außenliegenden rohrförmigen Schale, sowie auf ein Verfahren zum Herstellen eines derartigen isolierten Rohres.

Isolierte Rohre können in einfacher Weise dadurch hergestellt werden, daß um ein verlegtes, in Abstand von einer Wand oder Decke gehaltenes Rohr isolierende Schalen geklemmt werden. Für die Verlegung von Kunststoffrohren im Erdreich, im Boden, in einer Wand in Schächten oder Kabeltassen werden bisher zumeist ummantelte Rohre verwendet, welche neben einem gewissen Mindestmaß an Wärmedämmung vor allen Dingen eine schallschluckende Umhüllung tragen. Rohre, welche tatsächlich ein gewisses Mindestmaß an Wärmedämmung bieten, weisen im ummantelten Zustand einen vergleichsweise großen Außendurchmesser auf, und es ist bekannt, derartige Einzelrohre mit einem Innenrohr, einem wärmedämmenden Mantel und einem Außenrohr so auszugestalten, daß in der Folge immer noch das Aufrollen auf einen relativ großen Kerndurchmesser für den Transport an eine Baustelle möglich ist. Für die Verlegung von Warm- und Kaltwasserleitungen sowie für Heizungsanlagen sind neben einer Vorlaufleitung auch eine Rücklaufleitung bzw. neben einer Warmwasserleitung auch eine Kaltwasserleitung erforderlich, so daß bei Verwendung derartiger wärmedämmender isolierter Rohre ein relativ hoher Aufwand für den Einbau in Wände oder Decken besteht.

Die Erfindung zielt nun darauf ab, ein isoliertes Rohr der eingangs genannten Art dahingehend weiterzubilden, daß mit einem der derartigen, isolierten Rohr unmittelbar Heizungsanlagen mit Vor- und Rücklauf oder unmittelbar Warm- und Kaltwasserleitungen verlegt werden können, und dennoch den Vorteil aufrechtzuerhalten, daß das ummantelte und damit isolierte Rohr auf einen relativ kleinen Kerndurchmesser aufgewickelt werden kann. Erfindungsgemäß besteht ein derartiges isoliertes Rohr mit den gewünschten Eigenschaften im wesentlichen darin, daß zwei in definiertem Abstand voneinander angeordnete, zueinander parallel verlaufende Leitungsrohre in einem wärmedämmenden Material eingebettet sind, daß die außenliegende Schale im Querschnitt von der Kreisform abweicht und eine längere Achse des Querschnittes in der Ebene der Achsen der beiden Leitungsrohre aufweist und daß zwischen den Leitungsrohren und der Außenschale wenigstens eine Sperrschicht für $O_2$ und/oder Wasserdampf angeordnet ist. Bei der gleichzeitigen Anordnung von zwei Leitungsrohren in einem gemeinsamen, wärmedämmenden Mantel aus wärmedämmenden Material, welchem gegebenenfalls auch schallschluckende Eigenschaften zukommen können, ist es von wesentlicher Bedeutung, daß die Wärmedämmeigenschaften über die Länge des Rohres auch dann unverändert erhalten bleiben, wenn das Rohr in gewickeltem Zustand auf die Baustelle geliefert wird, wofür es zunächst erforderlich ist, daß ein derartiges, zwei Leitungsrohre enthaltendes Rohr überhaupt aufwickelbar ist, und weiters von Bedeutung ist, daß die relative Position der Leitungsrohre zur Isolation und zum Außenmantel bei Transport und Verlegung nicht geändert werden kann. Dadurch, daß zwei in definiertem Abstand voneinander angeordnete, zueinander parallel verlaufende Leitungsrohre in wärmedämmendes Material eingebettet sind, wird zunächst eine exakte Einhaltung der relativen Abstände der Leitungsrohre voneinander sichergestellt, und dadurch, daß die außenliegende Schale im Querschnitt von der Kreisform dergestalt abweicht, daß die längere Querschnittsachse quer zur Längsrichtung der Leitungsrohre verläuft, wird sichergestellt, daß die Baueinheit, bestehend aus den beiden Leitungsrohren und dem isolierenden Mantel gemeinsam mit der Außenschale auch tatsächlich auf relativ kleine Kerndurchmesser aufgerollt werden kann. Dadurch, daß nun zwischen den Leitungsrohren und der Außenschale wenigstens eine Sperrschicht für Sauerstoff und/oder Wasserdampf angeordnet ist, wird insgesamt ein isoliertes Rohr geschaffen, welches wartungsfrei über lange Zeiträume in Estrich, Wand oder Decke eingebettet werden kann, wobei der Umstand, daß eine Wasserdampf- bzw. Sauerstoff-Sperrschicht vorgesehen ist, die Möglichkeit bietet, entsprechend flexible Materialien für die Rohrleitungen und die Schale sowie den isolierenden Mantel zu wählen, da die geforderte Dichtheit durch eine derartige Sperrschicht erzielt werden kann. Gleichzeitig kann durch die Verwendung einer derartigen Sperrschicht zwischen Leitungsrohren und Außenschale die exakte Positionierung der Leitungsrohre relativ zueinander unter Zwischenschaltung von Abstandhaltern gewährleistet werden, so daß insgesamt ein Produkt mit hoher und gleichbleibender Isolation über die Länge des Rohrstranges erzielt werden kann. Mit Vorteil ist hiebei eine erste Sperrschicht für Wasserdampf an der Außenseite der Leitungsrohre und eine zweite Sperrschicht für $O_2$ an der Innenseite der Schale angeordnet, wodurch bei Leitungsrohren, welche beispielsweise aus Polybuten bestehen können, bei Verwendung von Polyethylen für die Außenschale und Polyurethanschaum als isolierendem Mantel eine hohe Standzeit und Temperaturwechselbeständigkeit erzielt wird. Die Sauerstoff-sperrschicht dient hiebei in erster Linie dazu, die Diffusion von Sauerstoff aus der Atmosphäre in das Innere der Rohrleitungen zu verhindern, so daß Korrosionen in Verbrauchern, wie beispielsweise Heizkörpern, wesentlich verringert werden, wohingegen die Wasserdampfsperrschicht ein Diffundieren von Wasserdampf aus dem Inneren der Rohrleitungen in die Umgebung des isolierten Rohres verhindern soll.

Zur exakten Einhaltung der gewünschten Abstände der Leitungsrohre voneinander und damit zur Verringerung von Wärmeverlusten durch unerwünschten Wärmeaustausch zwischen den beiden Leitungsrohren kann mit Vorteil die Ausbildung so getroffen sein, daß zwischen den zueinander parallelen Leitungsrohren Abstandhalter aus wärmedämmendem Material angeordnet sind.

Bei der Verlegung derartiger Verbundrohre bestehend aus zwei Leitungsrohren, dem isolierenden Mantel und der Außenschale, kann es ohne weiteres, beispielsweise beim Einbetonieren oder beim Verlegen in Estrich, zu Verwindungen um die Längsachse der Leitungsrohre des isolierten Rohres kommen. Um an der Stelle des jeweiligen Anschlusses mit Sicherheit das korrekte Leitungsrohr mit den jeweiligen Anschlüssen für Warm- oder Kaltwasser bzw. Vor- oder Rücklauf zu verbinden, ist mit Vorteil die Ausbildung so getroffen, daß die Schale an ihrer Außenseite Markierungen, insbesondere Längsstreifen, für die relative Lage der Schale zu einem der Leitungsrohre aufweist, wodurch die Einsatzsicherheit derartiger Rohre auf der Baustelle vergrößert wird.

Um das Aufwickeln eines derartigen Verbundrohres auf kleinen Kerndurchmesser zu erleichtern, ist die Ausbildung mit Vorteil so getroffen, daß die Schale im wesentlichen parallel zur längeren Querschnittsachse verlaufende Profilierungen, insbesondere Rillen, aufweist. Schließlich kann der Anwendungsbereich derartiger Rohre auch für eine Reihe von aggressiven Flüssigkeiten dadurch sicherer gemacht werden, daß im Dämmaterial Signalleitungen und/oder Sensoren für Betriebsparameter, wie z.B. Temperatur, Wasserdampfgehalt, $O_2$-Gehalt od.dgl., angeordnet sind.

Für die Herstellung eines derartigen isolierten Rohres wird erfindungsgemäß mit Vorteil so vorgegangen, daß zwei Leitungsrohre unter Zwischenschaltung von Abstandhaltern parallel zueinander geführt werden, daß die Leitungsrohre und die Abstandhalter durch Umwickeln oder Aufextrudieren einer, insbesondere als Sperrschicht für Wasserdampf ausgebildeten, Schicht miteinander verbunden werden, daß über die parallel zueinander angeordneten, in Abstand voneinander verlaufenden Leitungsrohre ein Mantel aus wärmedämmendem Material aufgeschäumt wird, daß der Mantel aus wärmedämmendem Material durch Umwickeln oder Aufextrudieren mit einer Sperrschicht ummantelt wird und daß eine Schale auf die Sperrschicht aufextrudiert wird. Die zugeführten Leitungsrohre können erfindungsgemäß unmittelbar aus zwei zueinander parallelen Extrudern extrudiert werden und die Anordnung bzw. Zwischenschaltung von Abstandhaltern an der Stelle ihrer Zuführung ist auch im kontinuierlichen Betrieb einfach möglich. Um sicherzustellen, daß bei dem nachfolgenden Umschäumen bzw. Aufschäumen des isolierenden Mantels eine relative Verschiebung der Positionen der durch Abstandhalter voneinander in Abstand gehaltenen Rohre verhindert wird, und insbesondere sicherzustellen, daß nicht nur der kleinste, zulässige Abstand, sondern gleichzeitig auch der konkret geforderte Abstand der Achsen der beiden Rohrleitungen voneinander gewährleistet ist, werden die Leitungsrohre und die Abstandhalter durch Umwickeln oder Aufextrudieren einer Schicht miteinander verbunden, wobei mit Vorteil diese Schicht für die Umwickelung gleichzeitig als Sperrschicht für Wasserdampf ausgebildet sein kann. Die mechanische Verbindung der beiden Leitungsrohre miteinander hat gleichzeitig den Vorteil, daß die so gebildete Einheit nach dem Aufschäumen des isolierenden Mantels eine gewisse axiale Verschiebbarkeit im Inneren des isolierten Rohres ermöglicht, wodurch das Wickeln und Manipulieren des fertigen, isolierten Rohres erleichtert wird. Dadurch, daß nun eine derartige, aus den zwei Leitungsrohren bestehende integrierte Baueinheit in der Folge mit einem Mantel aus wärmedämmendem Material, welcher durch Aufschäumen aufgebracht wird, umgeben wird, wird sichergestellt, daß während des Schäumens eine relative Verschiebung der Rohre zueinander nicht mehr möglich ist. Schließlich kann der entsprechend geformte Mantel aus wärmedämmendem Material dadurch, daß eine Sperrschicht aufgebracht wird, in der Folge gleichfalls wiederum in einer Weise ausgebildet werden, welche eine begrenzte Verschiebbarkeit in Achsrichtung der Rohrleitung relativ zur Schale ermöglicht, so daß auch hier wiederum das Aufwickeln auf kleine Kerndurchmesser erleichtert wird.

Mit Vorteil wird das erfindungsgemäße Verfahren so durchgeführt, daß das Aufschäumen des wärmedämmenden Materials in einer Form vorgenommen wird. Die Verwendung einer derartigen Form stellt sicher, daß die Geometrie des Querschnitts des wärmedämmenden Materials exakt eingehalten wird und daß über die Länge der Rohrleitung gleichbleibende Wärmedämmeigenschaften erzielt werden. Gleichzeitig kann auch dadurch, daß erst ein fertig aufgeschäumtes Material in der Folge mit einer Schale versehen wird, sichergestellt werden, daß eine relative axiale Verschiebbarkeit zwischen geschäumtem Mantel und Schale ermöglicht wird. Das Aufwickeln auf kleinen Kerndurchmesser kann hiebei bei Verwendung einer entsprechenden Form dadurch verbessert werden, daß das Aufschäumen des wärmedämmenden Mantels mit einer quer zur Längsachse des Mantels verlaufende Rippen und Rillen aufweisenden Form erfolgt, wobei in der Folge beim Aufbringen der Schale durch Auswahl entsprechender Kunststoffe eine der Profilierung des geschäumten, wärmedämmenden Mantels entsprechende Außenkontur erzielt werden kann. Die querverlaufenden Rippen bzw. Rillen erhöhen die Flexibilität beim Aufwickeln um eine parallel zur größeren Achse des Querschnittes verlaufende Achse.

Mit Vorteil wird die Sperrschicht an der Innenseite der Schale dadurch hergestellt, daß die über dem wärmedämmenden Material angeordnete Schale gemeinsam mit der Sperrschicht koextrudiert wird, wodurch sich eine besonders einfache Herstellung ergibt. Zur Erhöhung des Gebrauchswertes des fertigen Verfahrensproduktes können mit Vorteil gemeinsam mit der außenliegenden Schale Markierungen, insbesondere Längsstreifen, extrudiert werden, sowie vorzugsweise mit dem Material für das Aufschäumen des Mantels, insbesondere Polyurethan, Sensoren und/oder Signalleitungen eingebracht werden.

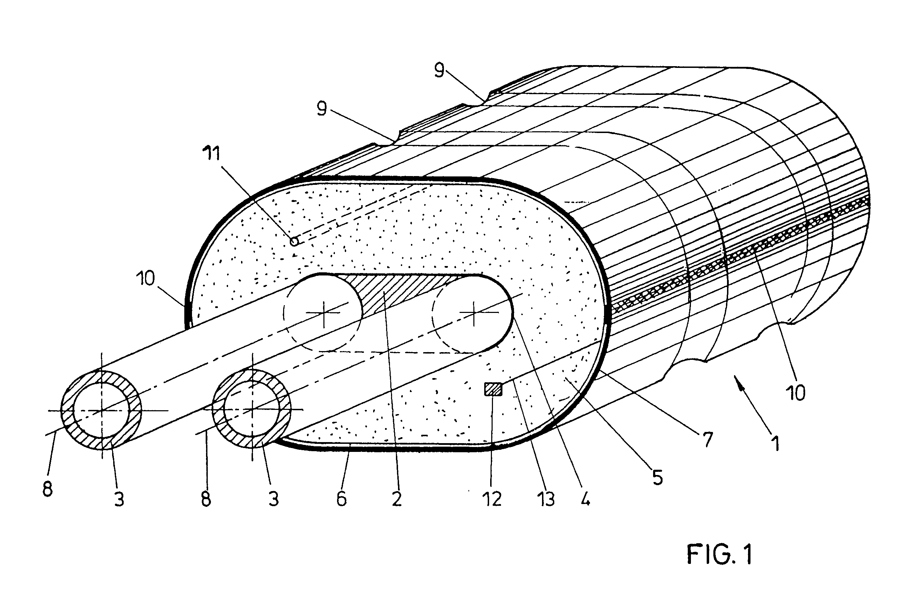

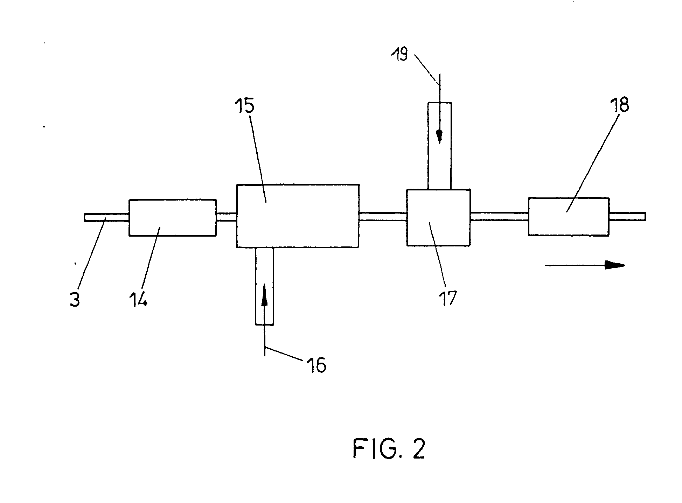

Die Erfindung wird nachfolgend an Hand eines in der Zeichnung schematisch dargestellten Ausführungsbeispieles näher erläutert. In dieser zeigen: Fig.1 eine perspektivische Ansicht eines erfindungsgemäßen, isolierten Rohres; und Fig.2 eine schematische Darstellung einer Anlage zur Durchführung des erfindungsgemäßen Verfahrens zum Herstellen eines erfindungsgemäßen Rohres.

In Fig.1 ist mit 1 ein isoliertes Rohr bezeichnet, welches zwei, durch schematisch angedeutete Abstandhalter 2 in vorbestimmtem Abstand voneinander gehaltene Leitungsrohre 3 aufweist, welche parallel zueinander verlaufen. Unmittelbar um die Leitungsrohre 3 und die Abstandhalter 2 ist eine Schicht 4 angeordnet, welche beispielsweise durch Umwickeln oder Extrudieren aufgebracht werden kann, und welche zum einen als mechanische Verbindung zur Einhaltung der relativen Lage zwischen den Leitungsrohren 3 dient und andererseits zusätzlich als Wasserdampf-Sperrschicht ausgebildet sein kann, um einen Austritt von Wasserdampf aus den Leitungsrohren 3 in die Ummantelung 5 aus wärmedämmendem Material und in weiterer Folge an die Umgebung zu verhindern. Der Mantel 5 aus wärmedämmendem Material wird beispielsweise durch Aufschäumen von Polyurethanschaum hergestellt. An der Außenseite des Mantels 5 aus wärmedämmendem Material ist eine weitere Sperrschicht 6 vorgesehen, welche ein Diffundieren von Sauerstoff in das Innere des Mantels und in weiterer Folge in das Innere der Leitungsrohre 3 verhindert. Das Leitungsrohr 1 wird von einer beispielsweise aus Polyethylen gebildete Schale 7 vervollständigt und weist ovalen bzw. elliptischen Querschnitt auf.

Für eine Erhöhung der Flexibilität und ein leichteres Wickeln auf Kerne für einen Transport zu einer Baustelle weist die Schale 7 sowie der darunterliegende Mantel 5 aus wärmedämmendem Material im wesentlichen quer zur Längsachse 8 der Leitungsrohre am Umfang verlaufende Rillen bzw. Vertiefungen 9 auf. Diese Rillen bzw. Vertiefungen können dabei durch Verwendung geeigneter Formen bei der Herstellung des wärmedämmenden Mantels 5 ausgebildet werden, worauf bei der anschließenden Extrusion die Sperrschicht 6, welche gegebenenfalls gemeinsam mit der Außenschale 7 extrudiert werden kann, und die Schale 7 die entsprechende Form der Rillen bzw. Vertiefungen aufweisen. Für eine Kennzeichnung der relativen Lage der Leitungsrohre 3 im isolierten Rohr sind Markierungen vorgesehen, welche von in Längsrichtung verlaufenden Längsstreifen 10, welche gemeinsam mit der Außenschale extrudiert werden können, gebildet werden und welche selbst bei einem Verwinden des isolierten Rohres beim Verlegen eine eindeutige Zuordnung der Leitungsrohre 3 bei den Anschlußstellen sicherstellen. Weiters können im wärmedämmenden Material 5 Signalleitungen 11 und in vorbestimmten Abständen auch Sensoren 12 mit anschließenden Leitungen 13 für die Ermittlung von Betriebsparametern vorgesehen sein.

Bei der in Fig.2 schematisch dargestellten Anlage zur Herstellung eines isolierten Rohres, wie es in Fig.1 dargestellt ist, werden einzelne Leitungsrohre 3, welche aus unmittelbar davor angeordneten und nicht näher dargestellten Extrudern stammen können, in eine erste Extrudiervorrichtung 14 eingebracht, in welcher nach einer Positionierung der Abstandhalter zwischen den zwei Rohren eine Ummantelung der Rohre 3 mit der Schicht 4 erfolgt, welche als Sperrschicht für Wasserdampf ausgebildet sein kann. Anstelle einer Extrudieranlage 14 für die mechanische Verbindung der Rohre kann auch eine Wickelanlage vorgesehen sein. In weiterer Folge gelangen die umwickelten bzw. mit der Schicht 4 ummantelten Rohre in eine Schäumvorrichtung 15, in welcher der Mantel 5 aus wärmedämmendem Material aufgeschäumt wird, wobei die Zufuhr von beispielsweise Polyurethanschaum mit 16 angedeutet ist.

Die Ausbildung des Mantels 5 erfolgt dabei unter Verwendung von geeigneten Formen. Anschließend an den Mantel 5 wird in einer zweiten Extrusionsanlage 17 mit einer schematisch angedeuteten Materialzufuhr 19 gleichzeitig die Sperrschicht für Sauerstoff 6 sowie die Außenschale 7 extrudiert, worauf das mittlerweile fertiggestellte Rohr in eine Nachbehandlungskammer 18 eingebracht wird und im Anschluß an diese auf nicht näher dargestellte Rolle mit relativ geringem Kerndurchmesser gewickelt werden kann. Bei Vorsehen von Signalleitungen und/oder Sensoren werden diese im Bereich der Anlage 15 beim Aufschäumen des wärmedämmenden Mantels 5 zugeführt.

**Patentansprüche**

1. Isoliertes Rohr (1) mit wenigstens einem innenliegenden Leitungsrohr (3), einem wärmedämmenden Mantel (5) und einer außenliegenden rohrförmigen Schale (7), dadurch gekennzeichnet, daß zwei in definiertem Abstand voneinander angeordnete, zueinander parallel verlaufende Leitungsrohre (5) in einem wärmedämmenden Material (5) eingebettet sind, daß die außenliegende Schale (7) im Querschnitt von der Kreisform abweicht und eine längere Achse des Querschnittes in der Ebene der Achsen (8) der beiden Leitungsrohre (3) aufweist und daß zwischen den Leitungsrohren (3) und der Außenschale (7) wenigstens eine Sperrschicht (4,6) für $O_2$ und/oder Wasserdampf angeordnet ist.

2. Rohr nach Anspruch 1, dadurch gekennzeichnet, daß eine erste Sperrschicht (4) für Wasserdampf an der Außenseite der Leitungsrohre (3) und eine zweite Sperrschicht (6) für $O_2$ an der Innenseite der Schale (7) angeordnet ist.

3. Rohr nach Anspruch 1 oder 2, dadurch gekennzeichnet, daß zwischen den zueinander parallelen Leitungsrohren (3) Abstandhalter (2) aus wärmedämmendem Material angeordnet sind.

4. Rohr nach Anspruch 1, 2 oder 3, dadurch gekennzeichnet, daß die Schale (7) an ihrer Außenseite Markierungen (10), insbesondere Längsstreifen, für die relative Lage der Schale (7) zu einem der Leitungsrohre (3) aufweist.

5. Rohr nach einem der Ansprüche 1 bis 4, dadurch gekennzeichnet, daß die Schale (7) im wesentlichen parallel zur längeren Querschnittsachse verlaufende Profilierungen (9), insbesondere Rillen, aufweist.

6. Rohr nach einem der Ansprüche 1 bis 5, dadurch gekennzeichnet, daß im Dämmaterial (5) Signalleitungen (13) und/oder Sensoren (12) für Betriebsparameter, wie z.B. Temperatur, Wasserdampfgehalt, $O_2$-Gehalt od.dgl., angeordnet sind.

7. Verfahren zum Herstellen eines isolierten Rohres nach einem der Ansprüche 1 bis 6, dadurch gekennzeichnet, daß zwei Leitungsrohre (13) unter Zwischenschaltung von Abstandhaltern (2) parallel zueinander geführt werden, daß die Leitungsrohre (3) und die Abstandhalter (2) durch Umwickeln oder Aufextrudieren einer, insbesondere als Sperrschicht für Wasserdampf ausgebildeten, Schicht (4) miteinander verbunden werden, daß über die parallel zueinander angeordneten, in Abstand voneinander verlaufenden Leitungsrohre (3) ein Mantel aus wärmedämmendem Material (5) aufgeschäumt wird, daß der Mantel aus wärmedämmendem Material (5) durch Umwickeln oder Aufextrudieren mit einer Sperrschicht (6) ummantelt wird und daß eine Schale (7) auf die Sperrschicht (6) aufextrudiert wird.

8. Verfahren nach Anspruch 7, dadurch gekennzeichnet, daß das Aufschäumen des wärmedämmenden Materials (5) in einer Form vorgenommen wird.

9. Verfahren nach Anspruch 7 oder 8, dadurch gekennzeichnet, daß gemeinsam mit der außenliegenden Schale (7) Markierungen, (10) insbesondere Längsstreifen, extrudiert werden.

10. Verfahren nach Anspruch 7, 8 oder 9, dadurch gekennzeichnet, daß die über dem wärmedämmenden Material (5) angeordnete Schale (7) gemeinsam mit der Sperrschicht (6) koextrudiert wird.

11. Verfahren nach einem der Ansprüche 7 bis 10, dadurch gekennzeichnet, daß das Aufschäumen des wärmedämmenden Mantels (5) mit einer quer zur Längsachse des Mantels (5) verlaufende Rippen und Rillen ( 9 ) aufweisenden Form erfolgt.

12. Verfahren nach einem der Ansprüche 7 bis 11, dadurch gekennzeichnet, daß mit dem Material (5) für das Aufschäumen des Mantels, insbesondere Polyurethan, Sensoren (12) und/oder Signalleitungen (13) eingebracht werden.

FIG.1

FIG. 2

EP 0 459 973 A1

Europäisches
Patentamt

# EUROPÄISCHER RECHERCHENBERICHT

Nummer der Anmeldung

EP    91 89 0119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|-----------|-------------------------------------------------------------------------------------|-------------------|-------------------------------------------|
| X | DE-U-6940125 (KABEL- UND METALLWERKE GUTEHOFFNUNGSHUTTE) <br> * das ganze Dokument * | 1 | F16L59/14 |
| A | | 2, 5, 7, 11 | |
| A | DE-A-2736084 (WIRSBO BRUKS) <br> * Seite 10, Zeile 8 - Seite 11, Zeile 10; Figuren 2, 3 * | 1, 2, 7 | |
| A | DE-U-7245529 (JULIUS & AUGUST ERBSLÖH) <br> * Seite 2, Zeilen 1 - 17; Figur 1 * | 1, 7, 8, 10 | |
| A | GB-A-1311472 (RASMUSSEN) <br> * Anspruch 1 * | 6, 12 | |
| A | DD-A-208407 (VEB VERKEHRS- UND TIEFBAUKOMBINAT) <br> * Zusammenfassung; Figur 3 * | 1 | |
| A | DE-A-3602866 (NOEL, MARQUET & CIE.) | | RECHERCHIERTE SACHGEBIETE (Int. Cl.5) <br><br> F16L |

Der vorliegende Recherchenbericht wurde für alle Patentansprüche erstellt

| Recherchenort | Abschlußdatum der Recherche | Prüfer |
|---------------|------------------------------|--------|
| BERLIN | 29 AUGUST 1991 | SCHAEFFLER C.A.A. |